Europäisches Patentamt

European Patent Office

Office européen des brevets

(19)

(11) Publication number: **0 134 327**
**B1**

(12) EUROPEAN PATENT SPECIFICATION

(45) Date of publication of patent specification: 28.10.87

(51) Int. Cl.⁴: **B 01 J 29/06**

(21) Application number: 83304711.1

(22) Date of filing: 15.08.83

(54) Treatment of zeolites.

(43) Date of publication of application:
20.03.85 Bulletin 85/12

(45) Publication of the grant of the patent:
28.10.87 Bulletin 87/44

(84) Designated Contracting States:
BE DE FR GB IT NL SE

(56) References cited:
FR-A-1 599 183
US-A-3 477 964
US-A-3 691 101
US-A-3 702 312
US-A-4 361 713
US-A-4 374 296

(73) Proprietor: MOBIL OIL CORPORATION
150 East 42nd Street
New York New York 10017 (US)

(72) Inventor: Chang, Clarence Dayton
11 Murray Place
Princeton New Jersey 08540 (US)
Inventor: Miale, Joseph Nicolas
25 Merritt Drive
Lawrenceville New Jersey 08648 (US)

(74) Representative: Grundy, Derek George Ritchie et al
CARPMAELS & RANSFORD 43, Bloomsbury Square
London WC1A 2RA (GB)

Courier Press, Leamington Spa, England.

## Description

This invention relates to the treatment of zeolites to enhance their acid activity.

The ion exchange capacity of a crystalline aluminosilicate is directly dependent on its aluminum content: the more aluminum there is in a crystalline structure of the zeolitic kind, the more cations are required to balance the electronegativity thereof, and when such cations are of the acidic type, such as hydrogen, they impart high catalytic activity. On the other hand, highly siliceous zeolites having little or substantially no aluminum have many important properties and characteristics and a high degree of structural stability and have become candidates for use in various processes including catalytic processes. Materials of this type include highly siliceous zeolites such as ZSM-5 (US—A—3,702,886), ZSM-11 (US—A—3,709,979) and ZSM-12 (US—A—3,832,449) to mention a few.

The silica-to-alumina ratio of a zeolite is often variable; for example, zeolite X can be synthesized with a silica-to-alumina ratio of from 2 to 3 and zeolite Y from 3 to about 6. In some zeolites, however, the upper limit of silica-to-alumina ratio is virtually unbounded. Zeolite ZSM-5 is one such material, its minimum silica-to-alumina ratio being 5. US—A—3,941,871 discloses a crystalline zeolite essentially free of aluminum and exhibiting an x-ray diffraction patter characteristic of ZSM-5. US—A—4,061,724, 4,073,865 and 4,104,294 describe microporous crystalline silicas or organo silicates of which the aluminum content is at impurity level.

Because of the extremely low aluminum content of these highly siliceous zeolites their ion exchange capacity is correspondingly low. Therefore when exchanged and processed in a conventional manner they are not as catalytically active as their higher aluminum containing counterparts.

The invention permits the preparation of catalysts from highly siliceous zeolites which have all the desirable properties inherently possessed by such materials yet have an acid activity which heretofore has only been manifested by materials having a higher aluminum content in their "as synthesized" form.

According to the present invention the catalytic activity of a crystalline zeolite is enhanced by contacting a zeolite having an ion exchange capacity less than 0.7 meq./g, after calcination at 200 to 600°C for from 1 minute to 48 hours, with aluminum fluoride; and thereafter converting the zeolite into the protonated (i.e. hydrogen or hydronium) form. The contacting may be solid- or liquid-phase and the conversion to the protonated form may be by hydrolysis or by ammonium exchange followed by calcination.

The invention is thus concerned with treatment of highly siliceous zeolites, particularly those of silica-to-alumina ratio greater than 100, preferably greater than 500, up to and including those aforementioned highly siliceous materials where the silica-to-alumina ratio is infinity or as reasonably close to infinity as practically possible, prepared from reaction solutions which involve no deliberate addition of aluminum. Trace quantities of aluminum are usually present in such materials due to the impurity of the reaction solutions. The invention also embraces treatment of those zeolites which have lattice elements other than silica and/or alumina associated therewith, such as boron, iron, chromium, etc.

A typical process in accordance with the invention is carried out by impregnating the crystalline zeolite with an ammoniacal aluminum fluoride solution at a temperature of from about 0°C to about 100°C, preferably from about ambient to about 50°C. The impregnated zeolite is then contacted with a warm, i.e. 50°C to 90°C, aqueous solution of from 0.1 to 2 Normal ammonium salt, e.g. 1N $NH_4NO_3$, and thereafter calcined at a temperature of from about 200°C to about 600°C in an inert atmosphere of air, nitrogen, etc. at subatmospheric atmospheric or superatmospheric pressures for from about 1 minute to about 48 hours.

The ammoniacal aluminum fluoride solution is composed of an aluminum fluoride, for example $AlF_3$, $(NH_4)_3AlF_6$ $(NH_4)_2AlF_5$ or $NH_4AlF_4$, and concentrated ammonium hydroxide or liquid ammonia. The amount of aluminum fluoride in the solution will be from about 0.1 weight percent to about 5 weight percent of the whole, with the weight to ratio of aluminum fluoride to crystalline zeolite being treated during the impregnation step being from about 0.1 to about 1 gram/gram.

The ammonium salt solution contacting step may be conducted for a period of time from about 1 hour to about 20 hours. The ammonium salt used is not narrowly critical and will normally be an inorganic salt such as ammonium nitrate, ammonium sulfate, ammonium chloride, etc.

Another typical process according to the invention is carried out by calcining a high silica crystalline zeolite having a silica-to-alumina ratio of at least 100, preferably at least 500, by heating the same at a temperature within the range of about 200°C to 600°C in an atmosphere of air, nitrogen, etc. at atmospheric, superatmospheric or subatmospheric pressures for between 1 minute and 48 hours. The calcined zeolite is thereafter contacted with aluminum fluoride at a temperature of from about 0°C to about 650°C, preferably from about 20°C to about 550°C, (the melting point of aluminum fluoride is 1040°C). The aluminum fluoride treated zeolite may, if desired, be hydrolyzed by contact with water at a temperature of from about 20°C to about 550°C. When the hydrolyzing temperature is below 100°C at atmospheric pressure, liquid water may be used. When the boiling point of water is exceeded, as when the hydrolizing temperature exceeds 100°C at atmospheric pressure, the zeolite may be purged with water-saturated gas, e.g. helium. The aluminum fluoride contacted and, if desired, hydrolyzed zeolite is contacted with an ammonium salt solution, aqueous or non-aqueous, and thereafter calcined at a temperature of from about 200°C to about 600°C in an inert atmosphere of air, nitrogen, etc. at subatmospheric, atmospheric or superatmospheric pressures for from about 1 minute to about 48 hours.

# 0 134 327

Optionally, the zeolite may be calcined prior to ammonium salt solution contacting at a temperature of from about 200°C to about 600°C in an inert atmosphere for from about 1 minute to about 48 hours. Also the ammonium salt solution contacted zeolite may be steamed, if desired, prior to the final calcination step. Such optional steaming step may be conducted at a temperature of from about 450°C to about 550°C, with 20 to 100% steam, for from about 15 minutes to about 24 hours. If the optional steaming step is used, the steamed zeolite may, if desired, be again contacted with an aqueous or non-aqueous ammonium salt solution prior to final calcination. Thus a favoured procedure according to the invention would be summarised by the following sequence of steps:

1. calcination
2. AlF$_3$ contact
3. optional hydrolysis
4. optional calcination
5. NH$_4^+$ contact
6. optional steaming
7. optional NH$_4^+$ contact
8. calcination

The amount of aluminum fluoride which is utilized in the aluminum fluoride contacting step is not narrowly critical but usually from about 0.1 to about 1 gram of aluminum fluoride is used per gram of zeolite. The aluminum fluoride may be provided as a precipitate by mixing the zeolite with an aqueous solution of an aluminum salt, e.g. NaAlO$_2$ or Al(NO$_3$)$_3$, followed by addition to the mixture of a source of fluoride ions, e.g. NH$_4$F in excess.

The ammonium salt solution contacting step may be conducted with an aqueous solution of an ammonium salt e.g. NH$_4$NO$_3$, for a period of time from about 1 hour to about 20 hours at a temperature of from ambient to about 100°C. The ammonium salt used is not narrowly critical and will normally be an inorganic salt such as ammonium nitrate, ammonium sulfate, ammonium chloride, etc. It may also be conducted in non-aqueous fashion under the same contact conditions, as when the ammonium salt is provided in a saturated alcohol solvent solution. The alcohol solvents useful for this include, as non-limiting examples, ethanol, propanol, butanol and mixtures thereof.

Hydrolysis and the ammonium salt solution contacting steps may be conducted simultaneously when the ammonium salt solution is aqueous. In any event, the benefits gained by the ammonium salt contacting step are realized subsequent to the aluminum fluoride contacting step and prior to final calcination.

Activation of zeolites with fluorides thus does not require the presence of an alumina-containing material as a source of activation aluminum, since according to the invention aluminum is provided by the aluminum fluoride component with the conditions of contact with the zeolite providing an alumination vehicle transporting aluminum into the zeolite structure where new acid sites are formed. Therefore, supported or unsupported zeolites, including those which have undergone severe thermal or hydrothermal deformation, may be suitably activated by the present method.

Of the zeolite materials advantageously treated in accordance herewith, zeolites ZSM-5, ZSM-12, ZSM-12. ZSM-23. ZSM-35, ZSM-38 and ZSM-48 are particularly noted. ZSM-23, -35, -38 and -48 are respectively defined by the x-ray data set forth in US—A—4,076,842, 4,016,245 and 4,046,859 and EP—A—15132. Many of these zeolites possess a constraint index within the range 1—12, a property which can be employed to define zeolites to which the invention is applicable.

The activity enhanced materials prepared according to the invention are useful as catalyst components for acid catalyzed organic compound conversion reactions. Such reactions include cracking of hydrocarbons, wherein the reaction conditions include a temperature of from about 350°C to about 600°C, a pressure of from about 0 to about 30 psia (0 to 2.07 bar), and a weight hourly space velocity of from about 0.1 to about 10; and conversion of methanol to gasoline, wherein the reaction conditions include a temperature of from about 400 C to about 500 C, a pressure of from about 0 to 1000 psig (0 to 70 bar), and a weight hourly space velocity of from about 0.1 to about 20.

It may be useful to composite the above-described activity enhanced crystalline zeolite with a matrix resistant to the temperature and other conditions employed in a conversion process. Suitable matrix materials are well known in the art and are described in our EP—A—1695.

The following examples illustrate the present invention.

Example 1

Zeolite ZSM-5 having a silica-to-alumina mole ratio of about 26,000:1 (65 ppm framework alumina, 110 ppm bulk alumina and 0.23 percent sodium) was calcined for 30 minutes at 538°C. A two gram sample of the calcined zeolite was impregnated with 163 milligram of NaAlO$_2$ (Baker's NaAlO$_2$ 15—20% NaOH; Assay 33.2% Na, 57.1% Al$_2$O$_3$ and 84.5% ash) dissolved in 1 milliliter water. The impregnated material was dried for 1 hour at 130°C. To the dried material was added 6 milliliters of aqueous solution containing 0.4 gram NH$_4$F which was a large enough excess to convert all aluminum from the NaAlO$_2$ to AlF$_3$. The mixture was placed in an ultrasonic bath for one minute, washed three times with 20 milliliters of water, and then dried at 130°C. The product was calcined overnight at atmospheric pressure and 650°C. The calcined material was

3

then exchanged with 1N $NH_4NO_3$ solution, steamed at 450°C for 22 hours (100% steam), again exchanged with 1N $NH_4NO_3$ solution, and again calcined as above.

### Example 2

A 1/6th inch extrudate was made comprising 35 weight percent of about 30,000:1 silica/alumina ratio which had been calcined at 538°C for 30 minutes. The extrudate was calcined in a muffle furnace at 538°C, then refluxed in 1N $Al(NO_3)_3$ for three hours, filtered and dried at 130°C. It was then impregnated with an excess of $NH_4F$ solution and filtered. The excess $NH_4F$ was sufficient to cause precipitation of $AlF_3$. The wet filter cake was then dried at 130°C and treated with aqueous solution of $NH_4NO_3$ (1N). The resulting product was calcined as above.

### Example 3

The calcined zeolite employed as starting material in Example 1 was treated with 1N $NH_4NO_3$ and calcined at 538°C.

### Example 4

A 2 gram sample of the calcined zeolite of Example 3 was impregnated with a solution containing 2 grams $Al(NO_3)_3 \cdot 9H_2O$, dried at 130°C and then treated with an excess of $NH_4F$ (sufficient for formation of $AlF_3$ precipitate). The product was hydrolyzed with hot water and then treated with a non-aqueous saturated $NH_4NO_3$/ethanol solution. After drying the product was calcined for six hours at 650°C and then again exchanged with 1N $NH_4NO_3$ solution. The final product zeolite was calcined at 538°C.

### Example 5

The product zeolites of Examples 1 to 4, were evaluated for acid activity by the Alpha Test and/or CPI (cyclopropane isomerization) Test. The results of these tests are listed below:

| Zeolite product of example number | Alpha value (n-hexane cracking) | CPI Value (cyclopropane isomerization) |
|---|---|---|
| 1 (starting material) | 0.015 | 1[1] |
| 1 (end product) | 1.9 | 450[2] |
| 2 (calcined extrudate) | 0.2 | — |
| 2 (end product) | .55 | — |
| 3 | 0.015 | 1 |
| 4 | 2.1 | 130 |

[1] Estimated value
[2] Extensive olefin oligomerization also observed

It is observed from this that Alpha Values were enhanced by the present method from 0.015 to 1.9, from 0.2 to 55 and from 0.015 to 2.1, respectively. CPI values were enhanced from 1 to 450 and from 1 to 130, respectively. It is also noted that mere ion exchange of the high silica material of Example 1 produced no activity enhancement.

### Example 6

For comparison purposes, a 2 gram sample of the calcined zeolite of Example 3 was impregnated with 450 milligrams of anhydrous $AlCl_3$ dissolved in solvent alcohol (95% ethanol and 5% isopropyl alcohol) and calcined at 538°C for 16 hours in air. One half of the resultant product was hydrolyzed in water and calcined at 538°C. The second half was treated with 1N $NH_4NO_3$, washed, dried at 130°C and then calcined at 538°C.

The two products of this example were evaluated as was done for the product zeolites of Examples 3 and 4.

The results are listed below:

| Zeolite product of example number | Alpha value | CPI Value |
|---|---|---|
| 3 | 0.015 | 1 |
| 4 | 2.1 | 130 |
| 6 First Half | 2.5 | 88 |
| 6 Second Half | 0.4 | — |

As is known in the art, the Alpha Value is an approximate indication of the catalytic cracking activity of the catalyst compared to a standard catalyst and it gives the relative rate constant (rate of normal hexane conversion per volume of catalyst per unit time). It is based on the activity of the highly active silica-alumina cracking catalyst taken as an Alpha of 1 (Rate Constant=0.016 sec$^{-1}$). The Alpha Test is described in The Journal of Catalysis, Vol. IV, pp. 522—529 (August 1965).

The CPI Index is a measure of the isomerization activity of a particular catalyst. The test involves measuring the rate of cyclopropane isomerization over the test catalyst and comparing it against silica-alumina (46 A.I.) as a reference standard. The test procedure involves utilizing a 5 to 250 mg. catalyst sample having a particle size of 20 to 200 mesh and mixing the same with about 1 ml of Vycor chips. The mixture is loaded into a 5 mm inside diameter Vycor reactor tube which is heated in air at a flow rate of 150 ml per minute to 538°C and maintained there for 30 minutes. The sample is then cooled at 250°C in helium at a flow rate of 12—18 ml per minute. Cyclopropane (helium/cyclopropane, 4, vol. to vol.) is then introduced and the reactor effluent analyzed by gas chromatographic techniques. The contact time is adjusted to keep the conversion within 0.5 to 50%. Since it is well known in the literature that the isomerization of cyclopropane is first order, rate constants may be determined at several temperatures to check for diffusional limitations. Using the above technique, the first order rate content for the standard 46 A.I. silica-alumina catalyst is 63.3 seconds$^{-1}$ at 250°C. This value was arbitrarily assigned an index of 1,000 so as to serve as a reference value. Thus, for example, the cyclopropane index (CPI Index) for a candidate catalyst with a first order rate constant of 0.633 would be determined as follows:

$$\frac{1,000 \times 0.633}{63.3} = 10$$

Example 7

An uncalcined portion of the zeolite employed as starting material in Example 1 was vacuum impregnated with saturated non-ammoniacal, aqueous aluminum fluoride solution, i.e. $(NH_4)^3 AlF_6$ at 25°C. After 30 minutes impregnation contact, the zeolite was dried at 130°C and contacted three times over an 18 hour period with 1N $NH_4NO_3$ (26°C). The sample was then washed, dried at 130°C and calcined at 538°C.

Example 8

The zeolite employed in Example 7 was vacuum impregnated at 25°C with a saturated ammoniacal solution of $(NH_4)_3 AlF_6$ (in concentrated $NH_4OH$). It was then dried, treated with 1N $NH_4NO_3$ and calcined as in Example 7.

Example 9

The zeolite employed in Example 7 was mixed with an equal weight of $(NH_4)_3 AlF_6$ and added to an equal volume of solid ammonia. The ammonia was melted at about −70°C and the resultant thin slurry was mixed thoroughly for 30 minutes at −70°C to 30°C. The excess ammonia boiled off and the zeolite was heated with $NH_4NO_3$ (80°C). The $(NH_4)_3 AlF_6$ was washed out by the process. The resultant zeolite was then calcined as in Example 8.

Example 10

The zeolite employed in Example 7 was treated as in Example 8 except that a boron fluoride, $NH_4BF_4$, was substituted for the aluminum fluoride, $(NH_4)_3 AlF_6$.

Example 11

Zeolite ZSM-5 having a silica-to-alumina mole ratio of 70:1 was calcined in air for 60 minutes at 1000°C, and used to catalyse methanol conversion to hydrocarbons at 370°C, 0 psig (1 bar) and a WHSV of 1.4. After 15 days on stream, the zeolite was regenerated by heating to 538°C in air for 30 minutes. The regenerated zeolite was then impregnated with a boron fluoride, $NH_4BF_4$, treated with $NH_4NO_3$ and calcined as in Example 10. Its Alpha Value was determined. The post-regeneration treatment was then repeated except that the impregnation was with an alkali metal fluoride, NaF, rather than the boron fluoride. Its Alpha Value was determined. The zeolite was then treated by the method according to the invention with an ammoniacal aluminum fluoride, ammonium salt solution and calcined as in Example 9. Its Alpha Value was determined.

Example 12

Zeolite ZSM-5 having a silica-to-alumina mole ratio of 250:1 was activated by treatment with volatile $AlCl_3$ and calcination for 30 minutes at 538°C in air. Its Alpha value was determined, and it was then treated by the method according to the invention as in Example 8 and its Alpha Value determined.

The Alpha values of the various products of the Examples are listed below:

| Example | Alpha value |
| --- | --- |
| 7 (starting material) | less than 0.1 |
| 7 (end product) | 1.0 |
| 8 | 30 |
| 9 | 36 |
| 10 | 0.7 |
| 11 (starting material) | 0.5 |
| 11 (first determination) | 2.2 |
| 11 (second determination) | 0.2 |
| 11 (third determination) | 8 |
| 12 (first determination) | 29 |
| 12 (second determination) | 60 |

**Claims**

1. A method of enhancing the catalytic activity of a crystalline zeolite having an ion exchange capacity less than 0.7 meq/g which comprises calcining the zeolite at 200 to 600°C for from 1 minute to 48 hours, characterised by contacting the calcined zeolite with aluminum fluoride, and converting the zeolite thus contacted to the protonated form.

2. A method according to claim 1 wherein the aluminum fluoride is in the solid phase.

3. A method according to claim 1 or claim 2 wherein the aluminum fluoride is precipitated in the presence of the zeolite.

4. A method according to claim 3 wherein the aluminum fluoride is precipitated from an aqueous solution of an aluminum salt by addition thereto of a source of fluoride ions.

5. A method according to claim 4 wherein the source of fluoride ions is an aqueous solution of ammonium fluoride.

6. A method according to claim 1 wherein the aluminum fluoride is in the liquid phase.

7. A method according to claim 6 wherein the aluminum fluoride is in the form of an ammoniacal solution.

8. A method according to claim 6 or claim 7 wherein the aluminum fluoride is $AlF_3$, $(NH_4)_3AlF_6$, $(NH_4)_2AlF_5$ or $NH_4AlF_4$.

9. A method according to any preceding claim wherein the conversion of the zeolite to the protonated form is effected by ammonium exchange followed by calcination at 200 to 600°C.

10. A method according to any of claims 1 to 8 wherein the conversion of the zeolite to the protonated form is effected by hydrolysis at a temperature of 20 to 550°C.

11. A method according to any of claims 1 to 5 wherein the contacting with aluminum fluoride is carried out at a temperature of 20 to 550°C.

12. A method according to any of claims 1 and 6 to 10 wherein the contacting with aluminum fluoride is carried out at a temperature of 0 to 100°C.

13. A method according to any preceding claim wherein the weight ratio of aluminum fluoride to zeolite during the contacting is from 0.1 to 1.0.

14. A method according to any preceding claim wherein the starting zeolite has a silica/alumina mole ratio greater than 100.

15. A method according to any preceding claim wherein the starting zeolite has a silica/alumina mole ratio greater than 500.

16. A method according to any preceding claim wherein the starting zeolite is one synthesised from a reaction mixture in which alumina is present only as an impurity.

17. A method according to any preceding claim wherein the starting zeolite contains lattice elements other than silicon and aluminum.

18. A method according to any of claims 1 to 17 wherein the zeolite is ZSM-5, -11, -12, -23, -35, -38 or -48.

19. A method according to any of claims 1 to 17 wherein the zeolite has a constraint index in the range of 1 to 12.

20. Use of zeolites of enhanced activity, obtained by the method claimed in any preceding claim, as catalysts or catalyst components in the conversion of organic compounds.

**Patentansprüche**

1. Verfahren zur Erhöhung der katalytischen Wirksamkeit eines kristallinen Zeoliths mit einer lonenaustauschkapazität von weniger als 0,7 Milliäquivalent/g, bei dem der Zeolith bei 200 bis 600°C während einer Minute bis 48 Stunden kalziniert wird, dadurch gekennzeichnet, daß der kalzinierte Zeolith mit Aluminiumfluorid in Kontakt gebracht wird und der so in Kontakt gebrachte Zeolith in die protonierte Form umgewandelt wird.

2. Verfahren nach Anspruch 1, worin das Aluminiumfluorid in der festen Phase vorliegt.

3. Verfahren nach Anspruch 1 oder 2, worin das Aluminiumfluorid im Gegenwart des Zeoliths ausgefällt wird.

4. Verfahren nach Anspruch 3, worin das Aluminiumfluorid aus einer wässrigen Lösung eines Aluminiumsalzes ausgefällt wird, in dem eine Fluoridionenquelle zugegeben wird.

5. Verfahren nach Anspruch 4, worin die Fluoridionenquelle eine wässrige Lösung von Ammoniumfluorid ist.

6. Verfahren nach Anspruch 1, worin das Aluminiumfluorid in der flüssigen Phase vorliegt.

7. Verfahren nach Anspruch 6, worin das Aluminiumfluorid in Form einer ammoniakalischen Lösung vorliegt.

8. Verfahren nach Anspruch 6 oder 7, worin das Aluminiumfluorid $AlF_3$, $(NH_4)_3AlF_6$, $(NH_4)_2AlF_5$ oder $NH_4AlF_4$ ist.

9. Verfahren nach einem der vorstehenden Ansprüche, worin die Umwandlung des Zeoliths in die protonierte Form durch Ammoniumaustausch, gefolgt von Kalzinierung bei 200 bis 600°C durchgeführt wird.

10. Verfahren nach einem der Ansprüche 1 bis 8, worin die Umwandlung des Zeoliths in die protonierte Form durch Hydrolyse bei einer Temperatur von 20 bis 550°C durchgeführt wird.

11. Verfahren nach einem der Ansprüche 1 bis 5, worin der Kontakt mit Aluminiumfluorid bei einer Temperatur von 20 bis 550°C durchgeführt wird.

12. Verfahren nach einem der Ansprüche 1 und 6 bis 10, worin der Kontakt mit Aluminiumfluorid bei einer Temperatur von 0 bis 100°C durchgeführt wird.

13. Verfahren nach einem der vorstehenden Ansprüche, worin das Gewichtsverhältnis von Aluminiumfluorid zum Zeolith während des Kontaktes von 0,1 bis 1,0 beträgt.

14. Verfahren nach einem der vorstehenden Ansprüche, worin der Ausgangszeolith ein Siliziumdioxid/Aluminiumoxid-Molverhältnis von größer als 100 aufweist.

15. Verfahren nach einem der vorstehenden Ansprüche, worin der Ausgangszeolith ein Siliziumdioxid/Aluminiumoxid-Molverhältnis von größer als 500 aufweist.

16. Verfahren nach einem der vorstehenden Ansprüche, worin der Ausgangszeolith ein solcher ist, der aus einer Reaktionsmischung synthetisiert wurde, in der Aluminiumoxid nur als Verunreinigung vorhanden ist.

17. Verfahren nach einem der vorstehenden Ansprüche, worin der Ausgangszeolith Gitterelemente enthält, die von Silizium und Aluminium verschieden sind.

18. Verfahren nach einem der Ansprüche 1 bis 17, worin der Zeolith ZSM-5, -11, -12, -23, -35, -38 oder -48 ist.

19. Verfahren nach einem der Ansprüche 1 bis 17, worin der Zeolith einen Zwangsindex im Bereich von 1 bis 12 aufweist.

20. Verwendung der Zeolithe mit erhöhter Wirksamkeit, die durch das Verfahren nach einem der vorstehenden Ansprüche erhalten wurden, als Katalysatoren oder Katalysatorkomponenten bei der Umwandlung organischer Verbindungen.

## Revendications

1. Un procédé pour améliorer l'activité catalytique d'une zéolite cristalline présentant une capacité d'échange ionique inférieure à 0,7 méq/g qui comprend la calcination de la zéolite entre 200° et 600°C pendant 1 minute à 48 heures, caractérisé en ce que l'on met la zéolite calcinée au contact de fluorure d'aluminium et convertit la zéolite ainsi traitée en forme protonée.

2. Un procédé selon la revendication 1, dans lequel le fluorure d'aluminium est en phase solide.

3. Un procédé selon la revendication 1 ou 2, dans lequel le fluorure d'aluminium est précipité en présence de la zéolite.

4. Un procédé selon la revendication 3, dans lequel le fluorure d'aluminium est préparé à partir d'une solution aqueuse d'un sel d'aluminium que l'on additionne à une source d'ions fluorure.

5. Un procédé selon la revendication 4, dans lequel la source d'ions fluorure est une solution aqueuse de fluorure d'ammonium.

6. Un procédé selon la revendication 1, dans lequel le fluorure d'aluminium est en phase liquide.

7. Un procédé selon la revendication 6, dans lequel le fluorure d'aluminium est sous la forme d'une solution ammoniacale.

8. Un procédé selon la revendication 6 ou la revendication 7, dans lequel le fluorure d'aluminium consiste en $AlF_3$, $(NH_4)_3AlF_6$, $(NH_4)_2AlF_5$ ou $NH_4AlF_4$.

9. Un procédé selon l'une quelconque des revendications précédentes, caractérisé en ce que la conversion de la zéolite en forme protonée est effectuée par échange d'ammonium suivi d'une calcination à 200—600°C.

10. Un procédé selon l'une quelconque des revendications 1 à 8, dans lequel la conversion de la zéolite en forme protonée est effectuée par hydrolyse à une température comprise entre 20° et 550°C.

11. Un procédé selon l'une quelconque des revendications 1 à 5, dans lequel le contact avec le fluorure d'aluminium est mis en oeuvre à une température comprise entre 20° et 550°C.

12. Un procédé selon l'une quelconque des revendications 1 et 6 à 10, dans lequel le contact avec le fluorure d'aluminium est mis en oeuvre à une température comprise entre 0° et 100°C.

13. Un procédé selon l'une quelconque des revendications précédentes, dans lequel le rapport pondéral fluorure d'aluminium/zéolite durant la phase de contact est compris entre 0,1 et 1.

14. Un procédé selon l'une quelconque des revendications précédentes, dans lequel la zéolite de départ présente un rapport molaire silice/alumine supérieur à 100.

15. Un procédé selon l'une quelconque des revendications précédentes, dans lequel la zéolite de départ présente un rapport molaire silice/alumine supérieur à 500.

16. Un procédé selon l'une quelconque des revendications précédentes, dans lequel la zéolite de départ est une forme obtenue par synthèse à partir d'un mélange réactionnel dans lequel l'alumine n'est présent que sous forme d'impuretés.

17. Un procédé selon l'une quelconque des revendications précédentes, dans lequel la zéolite de départ contient des éléments de réseaux autres que silicium et aluminium.

18. Un procédé selon l'une quelconque des revendications 1 à 17, dans lequel la zéolite consiste en ZSM-5, ZSM-11, ZSM-12, ZSM-23, ZSM-35, ZSM-38 ou ZSM-48.

19. Un procédé selon l'une quelconque des revendications 1 à 17, dans lequel la zéolite présente un indice de contrainte compris entre 1 et 12.

20. Application de zéolites présentant une activité améliorée, obtenues par le procédé selon l'une quelconque des revendications précédentes, en tant que catalyseurs ou constituants catalytiques dans la conversion de composés organiques.